# EUROPEAN PATENT SPECIFICATION

(11) **EP 3 552 367 B1**
(45) Date of publication and mention of the grant of the patent: **15.07.2020**
(21) Application number: 16815783.2
(22) Date of filing: 12.12.2016
(51) Int. Cl.: H04L 29/08, H04L 29/06

(54) **METHOD AND INTERMEDIATE NETWORK NODE FOR MANAGING TCP SEGMENT**
VERFAHREN UND ZWISCHENNETZWERKKNOTEN ZUR VERWALTUNG VON TCP-SEGMENTEN
PROCÉDÉ ET NOEUD DE RÉSEAU INTERMÉDIAIRE DE GESTION DE SEGMENT TCP

(43) Date of publication of application: 16.10.2019
(73) Proprietor: Telefonaktiebolaget LM Ericsson (PUBL), 164 83 Stockholm (SE)
(72) Inventor: GOCHI GARCIA, Ibon, ES-28010 Madrid (ES)
(74) Representative: Ericsson
(86) International application number: PCT/EP2016/080619
(87) International publication number: WO 2018/108236

(56) References cited:
- EP-A2- 1 039 718
- US-A1- 2004 034 773
- US-A1- 2014 195 797

## Description

### TECHNICAL FIELD

Embodiments herein relate to a communication system, such as a telecommunication system, a radio access network or the like. In particular, a method and an intermediate network node for managing at least one Transmission Control Protocol segment are disclosed. A corresponding computer program and a computer program carrier are also disclosed.

### BACKGROUND

In today's communication systems, in which information is stored in different locations and domains and with the increase need for complex use cases and advanced functionality, a need for exchange of information between different players in a marketplace of communication system remains to be satisfied for some cases.

A common, and generic, case comprise: a user accessing, from their terminal (commonly referred as "User Equipment", UE, or communication device), to the services provided by a Service Provider (SP) through the access provided by the operator of a telecommunications system. The SP can, e.g., provide the user via the UE: with access to a secure transaction, with access to a certain data file, etc. The SP can also, e.g., provide the UE with the possibility to download certain media contents (e.g. audio and/or video contents), in which case the SP is commonly known as a content provider (CP). The telecommunications systems commonly used today provide, not only voice communications services between UEs, but also allow access between UEs and any kind of SP. An example of such kind of telecommunications system are disclosed by the Third Generation Partnership Project (3GPP), which envisages UE accessing to the telecommunications systems of a network operator via wireless or wired connections. For simplicity, hereinafter, the telecommunications system (e.g. 3GPP) to which a UE connects so as to access to the services provided by a SP shall be referred hereinafter as "Access Network", AN.

Within the realm of Third Generation Partnership Project (3GPP) Access Networks (AN), the need to identify subscribers from the Access Network towards the Content or Service Providers (CP/SP) is well known and essential to build use cases implementing subscriber identification or single-sign-on functionality. The single-sign-on functionally may mean that no password need to be entered, or that once a user has been authenticated by one player a further authentication may be dispensed with.

In these use cases and within the framework of a 3GPP Access Network, an operator controlling the Access Network authenticates subscribers via well-known and standardized mechanisms involving specific requirements on User Equipment (UE) and Subscriber Identity Modules (SIM). After these well-known and standardized mechanism, the operator can identify a subscriber, i.e. the user equipment comprising the SIM of the subscriber, and provide the subscriber with connectivity services along with a set of identifiers, such as International Mobile Subscriber Identity (IMSI), Mobile Station ISDN Number (MSISDN) where Integrated Services Digital Network is abbreviated as ISDN, International Mobile Equipment Identity (IMEI) and others in case of 3GPP networks, along with the provision of an Internet Protocol address.

For networks other than 3GPP, it is assumed a similar functionality can be provided. For each standard and/or technology, procedures providing the similar functionality are assumed to be known.

In these uses cases, collaboration between Access Networks and Content Providers rely on that the Access Networks uniquely identifies subscribers and that the Content Providers provide their services for different Access Networks. The services can be provided in different manners for different Access Networks. For instance, the service can include customization of content - commonly referred as "content enrichment" -, allowing for additional services or customization of interfaces and/or procedures.

Examples of these use cases include:
- Single or No Sign-on: when an Access Network communicates the IMSI of a subscriber to a Content Provider, the Content Provider can grant access to the subscriber without the need to present credentials (email and or password) since in this use case the Content Provider can rely on the authentication already carried out by the Access Network on the subscriber.
- Additional Content: Content Providers with special agreements with certain Access Networks can serve additional content - or maybe content with better quality, like HD video vs normal quality video - to subscribers identified by Access Networks as belonging to one of the preferred list of Access Networks.
- Additional Context: if Access Networks were to share information like the MSISDN or the ULI (in case of 3GPP networks) the Content Provider could use that information to send SMSs to the subscriber or to locate the subscriber automatically - without the need to ask the subscriber for that information and knowing that the information can be trusted as it would be supplied by the Access Network.

The use cases described above are implemented primarily using Hypertext Transfer Protocol (HTTP) Header Enrichment, also known as Content-Enrichment. So called customized Transmission Control Protocol (TCP) options are also used, but are in general terms rarer since implementation requires changes to a TCP stack, i.e. changes at kernel level, meaning changes to the Operating System (OS).

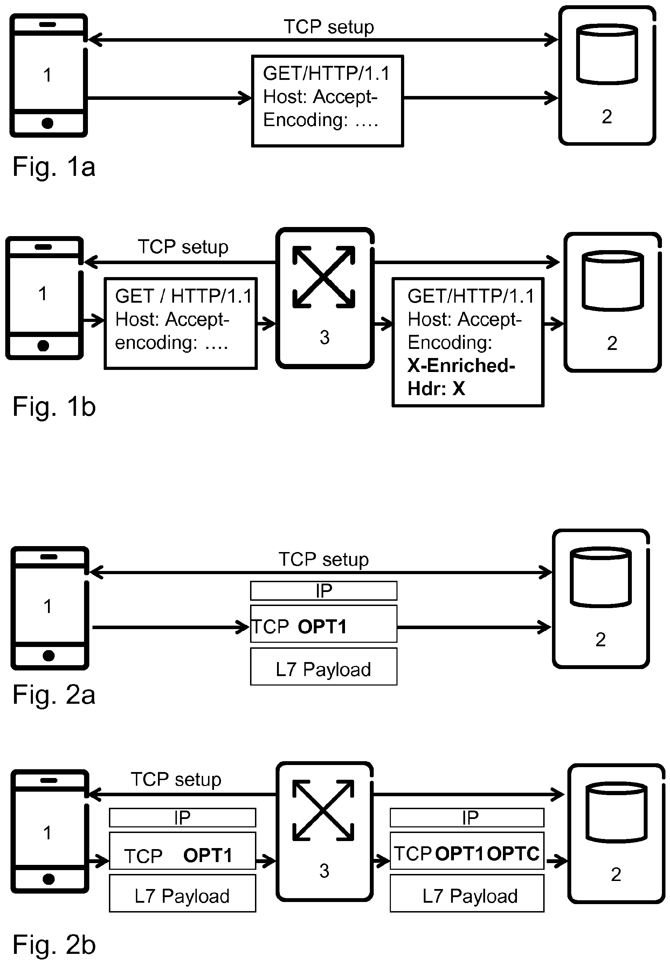

HTTP Header enrichment is a well know mechanism that adds customized HTTP headers, also called X-Headers since they usually start with the letter X, to HTTP requests, such as GET, POST or any other request. As a comparison, Figure 1a illustrates a conventional HTTP-connection established after a three-way handshake or TCP Fast Open (TFO) setup between a mobile phone 1 and a content provider 2. On the established HTTP-connection, requests, such as GET etc., may be transmitted from the mobile phone 1 to the content provider 2.

Turning to Figure 1b, a schematic illustration of HTTP Header enrichment at a packet gateway 3 is provided. A non-enriched HTTP-request from the mobile phone 1 is received and processed by the packet gateway 3, which thus sends an enriched request to the content provider 2. The enriched request includes an X-header carrying enrichment data X.

Any value can be inserted in the X-Headers, with IMSI, MSISDN and User Location Identifier (ULI) being the most commonly used in 3GPP Access Networks. A value inserted can have any format and it can be in clear text, encrypted or hashed. The Access Network and the Content Provider are required to be aware of the format.

Insertion of content at HTTP level requires correction of sequence and acknowledgment numbers at TCP level for TCP segments following after the insertion during a remaining existence of a TCP connection supporting transfer of the HTTP requests.

Insertion of content at HTTP level is advantageous for web based services.

US2014195797 discloses a network device receiving TCP segments of a flow via a first SSL session and transmitting TCP segments via a second SSL session. Once a TCP segment has been transmitted, the TCP payload need no longer be stored on the network device. Substantial memory resources are conserved, because the device may have to handle many retransmit TCP segments at a given time. If the device receives a retransmit segment, then the device regenerates the retransmit segment to be transmitted. A data structure of entries is stored, with each entry including a decrypt state and an encrypt state for an associated SSL byte position. The device uses the decrypt state to initialize a decrypt engine, decrypts an SSL payload of the retransmit TCP segment received, uses the encrypt state to initialize an encrypt engine, re-encrypts the SSL payload, and then incorporates the re-encrypted SSL payload into the regenerated retransmit TCP segment.

EP 1039718 discloses a data communication method and a data communication system comprising preparing beforehand a message provided with a dedicated header having information necessary for each control which is required to perform data communication, and exchanging the message between a terminal equipment and an interconnecting installation to transmit/receive desired data. The message includes connection identifier information for identifying connection which is a virtual channel set between the terminal equipment and the interconnecting installation.

US2004034773 discloses a method and apparatus for establishing authenticated network (e.g., TCP/IP) connections augments the network (e.g., TCP/IP) protocol and enables concealment of the presence of network (e.g., TCP/IP) servers on the network. A network (e.g., TCP/IP) connection establishment could be authenticated using both shared secret cryptographic and public key cryptographic methods. The trust between peers could be established either directly or via a trusted third party. One methodology allows network (e.g., TCP/IP) server concealment against Internet based eavesdroppers and eavesdroppers staging man-in-the-middle attacks on the local network or in the close proximity to the server. The techniques described herein may be used to protect a network (e.g., TCP/IP) server from establishing unsanctioned connections from both local and remote networks.

Moreover, insertion of content at HTTP level is normally cheap to implement at the Content Provider since most webservers offer possibility of retrieving custom HTTP headers from HTML code or any other server side language, scripting or non-scripting type.

Some drawbacks of insertion of content at HTTP level is though that TCP sequence and acknowledgment number correction is computationally expensive for the Access Network since it has to done for the remaining duration of the TCP flow.

The insertion of content at HTTP level is not applicable to encrypted HTTP (HTTPs).

If no HTTP is used as part of the Content Provider offerings, e.g. because other protocols are used, i.e. HTTPs, an additional HTTP flow is required just for purposes of conveying Access Network information. This is not efficient.

Another way of conveying enrichment data, such as Access Network information, is to take advantage of customized TCP Options. Customized TCP Option has been used to convey fast changing bandwidth information from 3GPP Access Networks towards different servers, such as a server providing streaming video, like "YouTube"-servers. In this manner, video delivery is intended to be improved, e.g. since the video delivery, i.e. the video encoding in the delivery, can be more reactive to fast changes in available bandwidth. As a comparison, Figure 2a illustrates a conventional TCP/IP connection established by a three-way handshake or TCP Fast Open (TFO) setup. On the established TCP/IP connection, IP packets may be transmitted from a mobile phone 1 to a content provider 2.

Turning to Figure 2b, a schematic illustration of using customized TCP Options at a packet gateway 3 is provided. A non-enriched IP packet from the mobile phone 1 is received and processed by the packet gateway 3, which thus sends an enriched IP packet to the content provider 2. The enriched IP packet includes in a TCP header a customized options field that carries enrichment data OPTC.

In order to use customized TCP Options, it is required to register and use private TCP Options fields. The TCP Options are called private because it may be that it is only the content provider and the Access Network that is aware of the meaning of these fields. The format of the content in those Options fields can be determined freely, as with Header Enrichment, and it can be in clear text, encrypted or hashed. Returning to the example of video delivery above, the TCP Options field can indicate a value relating to available bandwidth.

A benefit of custom TCP Options is that no HTTP traffic, carrying the enrichment data, is required and that it works also with encrypted HTTP (HTTPs) since the insertion of the enrichment data is done at TCP level below the Transport Layer Security (TLS) headers used to provide encrypted HTTP. Custom TCP Options is considered to be cheap, in terms of computing capacity required in the Access Network, since sequence or acknowledgment numbers need not be changed due to insertion of enrichment data.

Nevertheless, use of custom TCP Options is considered to have the following drawbacks. Difficult and expensive to implement in Content Providers, since retrieval of TCP Options is not always supported by standard TCP stacks, that is implemented in the kernel, so changes to the Operating System are expected. Moreover, custom/non-standard TCP Options can be removed or modified by proxies and middleware, often referred to as middleboxes, whose default policy is to remove unknown or un-configured TCP extensions and options.

### SUMMARY

An object may be to provide an alternative for including enrichment data in data transferred from a first end-point, such as the mobile phone, to a second end-point, such as the content provider.

According to an aspect, the object is achieved by a method, performed by an intermediate network node, for managing at least one Transmission Control Protocol (TCP) segment. The intermediate network node handles a TCP flow between a first end-point and a second end-point. The second end-point is configured to use enrichment data included in received TCP segments. Initially, the intermediate network node receives a TCP segment from the first end-point. The intermediate network node then identifies the TCP segment as belonging to the TCP flow. The intermediate network node injects enrichment data into the TCP flow by performing a first set of actions and/or a second set of actions.

The first set of actions comprises that the intermediate network node generates a first set of TCP segments comprising the enrichment data. Moreover, the intermediate network node sets a respective urgent (URG) flag of each TCP segment of the first set. The intermediate network node adjusts a respective sequence number of said each TCP segment of the first set and a respective acknowledgment number of said each TCP segment of the first set based on a sequence number of the TCP segment and an acknowledgment number of the TCP segment.

Alternatively or additionally, the second set of actions comprises that the intermediate network node inserts the enrichment data into the TCP segment. Furthermore, the intermediate network node sets an urgent "URG" flag of the TCP segment. Moreover, the intermediate network node determines an URG pointer of the TCP segment based on the enrichment data.

According to another aspect, the object is achieved by an intermediate network node configured for managing at least one TCP segment. The intermediate network node is configured for handling a TCP flow between a first end-point and a second end-point. The second end-point is configured to use enrichment data included in received TCP segments. The intermediate network node is configured for receiving a TCP segment from the first end-point. The intermediate network node is configured for identifying the TCP segment as belonging to the TCP flow. The intermediate network node is also configured for injecting enrichment data into the TCP flow by being configured for performing a first set of actions and/or a second set of actions.

The first set of actions may be performed by that the intermediate network node is configured for generating a first set of TCP segments comprising the enrichment data. Furthermore, the intermediate network node is configured for setting a respective URG flag of each TCP segment of the first set. The intermediate network node is further configured for adjusting a respective sequence number of said each TCP segment of the first set and a respective acknowledgment number of said each TCP segment of the first set based on a sequence number of the TCP segment and an acknowledgment number of the TCP segment.

The second set of actions may be performed by that the intermediate network node is configured for inserting the enrichment data into the TCP segment. Moreover, the intermediate network node is configured for setting an URG flag of the TCP segment. The intermediate network node is further configured for determining an URG pointer of the TCP segment based on the enrichment data.

According to further aspects, the object is achieved by a computer program and a computer program carrier corresponding to the aspects above.

Thanks to the embodiments herein the intermediate network node may enhance the TCP flow by including enrichment data into the TCP flow from the first end-point to the second end-point. The intermediate node may insert the first set of TCP segments into the TCP flow. The first set of TCP segments comprises, or carries, the enrichment data. Alternatively or additionally, the intermedia node may modify the received TCP segment of the TCP flow to include the enrichment data. The intermedia network node also sets the URG flag of the TCP segment and/or the URG flags of the first set of TCP segments.

An advantage is that enrichment data may be injected in both HTTP and HTTPs traffic and other traffic, while not requiring changes at TCP level to the first end-point and/or the second end-point.

### BRIEF DESCRIPTION OF THE DRAWINGS

The various aspects of embodiments disclosed herein, including particular features and advantages thereof, will be readily understood from the following detailed description and the accompanying drawings, in which:
Figure 1a and 1b are block diagrams illustrating a known manner of providing enrichment data,
Figure 2a and 2b are further block diagrams illustrating another known manner of providing enrichment data,
Figure 3 is a yet other block diagram illustrating known principle of URG flag,
Figure 4 is a schematic overview of an exemplifying system in which embodiments herein may be implemented,
Figure 5 is a combined signaling and flowchart illustrating the methods herein,
Figure 6 is a combined signaling and flowchart illustrating the methods herein,
Figure 7 is a block diagram illustrating some first embodiments herein,
Figure 8 is a block diagram illustrating some second embodiments herein, and
Figure 9 is a block diagram illustrating embodiments of the intermedia network node.

### DETAILED DESCRIPTION

Throughout the following description similar reference numerals have been used to denote similar features, such as nodes, actions, modules, circuits, parts, items, elements, units or the like, when applicable. In the Figures, features that appear in some embodiments are indicated by dashed lines.

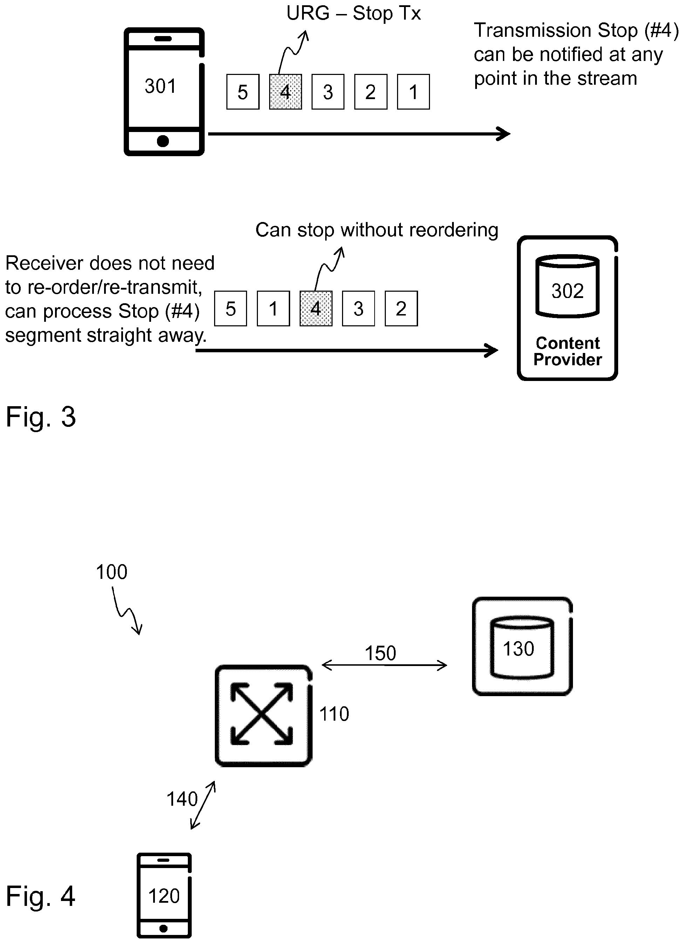

**Figure 3** illustrates a facility of TCP known as urgent (URG) flag. This is a facility that allows a TCP segment to bypass its ordering to be used for processing thereof. Accordingly a so called URG flag may be set for a particular TCP segment. This means that such particular TCP segment may be taken out of its order and instead it may be processed immediately. Expressed differently, the TCP segment is taken out of band, which is a reason for referred to this facility as an Out-Of-Band (OOB) facility.

It shall here also be said that the expression "setting a flag" means that a value of one (1) is assigned to the flag, while the expression "clearing a flag" means that a value of zero (0) is assigned to the flag.

Now continuing in more detail, the URG flag in TCP was originally conceived to send out-of-band (OOB) data to the receiver without having to wait for the processing of ordinary, in order and without errors, stream data.

An exemplifying use case for the URG flag relates to cancellation of a transfer of a file as shown in Figure 3. The file may be carried in at least some of segments #1 to #5. When a sender 301 of the file cancels the transfer, a TCP segment #4 with a cancel command and the URG flag set (i.e. equal to one) is sent to a receiver 302 of the file. The receiver 302 does not need to process all in-flight and/or buffered TCP segments transmitted before the TCP segment #4 with the set URG flag. Since the transfer of the file has been cancelled, it makes no use to make sure that checksums are ok, that missing segments are (re-)transmitted or that out of order segments are delivered in order for those in-flight and/or buffered TCP segments. Any data, e.g. payload, user data or the like, in those in-flight and/or buffered TCP segments would be discarded anyway due to that the transfer of the file has been cancelled.

Thanks to the URG flag, the receiver 302 is given a possibility to process out of order (or out of band) TCP segments with the URG flag set - and to do so without having to process regular segments, i.e. those with the URG flag cleared, transmitted before the OOB data - was seen as an improvement to save bandwidth and processing resources and allowed for implementation of asynchronous notifications in TCP.

Certain implementations of TCP, like the ones available in Unix-like Operating Systems (OS), provide for transmission of OOB data via a user space signal to a process listening on a socket associated with a concerned TCP flow. Other Operating Systems will implement other mechanisms, but this one, i.e. using process signals, allow for asynchronous notification of events to any listening process, i.e. application.

Standard support in the TCP protocol and also standard support for the delivery of information in the TCP stack and Operating System are useful qualities of an enrichment technique, since these qualities reduce cost of implementation of the enrichment technique and cost of deployment thereof. In this manner, a solution, as those according to the embodiments herein, becomes more attractive to e.g. owners of Access Networks and Content Providers. The content providers may preferably only consider modifications of the server side applications, such as webservers and the like, running on top of the OS. Hence, modifications are only affecting equipment handled by these owners. Equipment may here refer to a node, an end-point, a computer e.g. as in the system described below. In particular, the modifications only affect a so called application layer on top of the operating system. Thus, leaving e.g. implementation of TCP and OS unaffected by the embodiments herein.

**Figure 4** depicts an exemplifying **system 100** in which embodiments herein may be implemented. The system 100 may be a computer system interconnection a plurality of computers and/or devices. The system may be said to be at least portion of the Internet.

In some part of the system 100, **an intermediate network node 110** is located. This means that the system 100 comprises the intermediate network node 110. Said some part of the system 100 may be a telecommunication system, such a radio communication system, a cellular radio communication system, a radio access network, or the like. The telecommunication system may be based on Global System for Mobile communications (GSM), Long Term Evolution (LTE), Universal Mobile Telecommunication System (UMTS), Worldwide Interoperability for Microwave Access (WiMAX), LTE Frequency Division Duplex (FDD), LTE Time Division Duplex (TDD), LTE Half-Duplex Frequency Division Duplex (HD-FDD), LTE operating in an unlicensed band, or a Wideband Code Division Multiple Access (WCDMA), Universal Terrestrial Radio Access (UTRA) TDD, Ultra-Mobile Broadband (UMB), GSM/Enhanced Data Rate for GSM Evolution (EDGE) Radio Access Network (GERAN), any combination of Radio Access Technologies (RATs) such as e.g. Multi-Standard Radio (MSR) base stations, multi-RAT base stations etc., any 3rd Generation Partnership Project (3GPP) cellular network, WiFi networks, Worldwide Interoperability for Microwave Access (WiMax), 5G system or the like.

As one example, the intermediate network node 110 may be a Packet Gateway in case of LTE or the like. The intermediate network node 110 may thus be included in, or have access to information in, a Radio Access Network of the telecommunication system. Accordingly, the embodiments herein are related to Data Networks, in particular to Packet Core Networks in 3GPP Access Networks. Therefore, it may be said that a telecommunication network comprises the intermediate network node 110.

**A first end-point 120** may be capable of communicating 140, 150 with, i.e. receive and/or send any data to/from, **a second end-point 130.** The first end-point 120 may be a device connected to the telecommunications system of a telecommunications network operator by any means, e.g. wireless/radio or wired/cable means. The device may be a communication device as described further below. The second end-point 130 may be a server providing content, such as streaming video/audio, computing services relating to voice recognition or the like. The second end-point may thus be referred to as a content provider.

In a particular example, the first end-point 120 may be a client module, such as an application layer client accessing a service provided by a content providing module, where the content providing module is an application layer server providing the service for the client module. The content providing module is then an example of the second end-point 130.

As used herein, the term "communication device" may refer to a user equipment, a machine-to-machine (M2M) device, a mobile phone, a cellular phone, a Personal Digital Assistant (PDA) equipped with radio communication capabilities, a smartphone, a laptop or personal computer (PC) -which may be equipped with an internal or external modem-, a tablet PC with mobile (radio) or fixed (wired) communication capabilities, a portable electronic radio communication device, a sensor device equipped with radio communication capabilities, or the like. The term "user" may indirectly refer to the communication device. Sometimes, the term "user" may be used to refer to the user equipment or the like as above. It shall be understood that the user may not necessarily involve a human user. The term "user" may also refer to a machine, a software component or the like using certain functions, methods and similar.

As used herein, the term "enrichment data" may refer to any data, such as payload, user data, video/audio data, message(s) or the like. It may be that the intermediate network node finds, such as retrieves from a memory, determines e.g. by calculation, searches e.g. by deep packet/segment inspection, the enrichment data. The memory may be local or remote, e.g. embodied in the form of a database or the like. The enrichment data may in particular comprise at least one of: subscriber identity information, Mobile Station International Subscriber Directory Number (MSISDN), International Mobile Subscriber Identity (IMSI), User Location Info (ULI), a type of networks, e.g. WiFi or cellular, public or private, etc. and a free text. The free text may indicate any other suitable value, such as roaming status, etc..

As an overview of exemplifying methods performed in the system 100 of Figure 4, the following brief description is provided.

The intermediate network node 110 handles, such as manages, a TCP flow from the first end-point 120 to the second end-point 130. In this example, it is the second end-point 130 that may take advantage of enrichment data provided by, e.g. inserted, injected or the like, the intermediate network node 110. This means that the second end-point 130 may be configured to use enrichment data of the TCP flow.

Once the intermediate network node 110 receives a TCP segment from the first end-point 120, the intermediate network node 110 may identify that the TCP segment belongs to the TCP flow, e.g. the TCP flow to be enriched.

Then, the intermediate network node 110 injects enrichment data into the TCP flow according to some first embodiments and/or according to some second embodiments. With the first embodiments, one or more newly generated TCP segment having its/their URG flag set, i.e. equal to 1, carries the enrichment data as payload. With the second embodiments, it may be that the received TCP segment is smaller than a maximum allowed segment size. Thus, the enrichment data, or at least parts of it, may be carried as payload in this received TCP segment, while as before the URG flag is set of this received TCP segment and an URG pointer thereof is determined based on the enrichment data, e.g. based on size of the enrichment data.

The enriched TCP segments may then be sent to the second end-point 130.

In this manner, an alternative method of injecting enrichment data in to a TCP flow is provided, e.g. by using the URG flag facilities available in TCP.

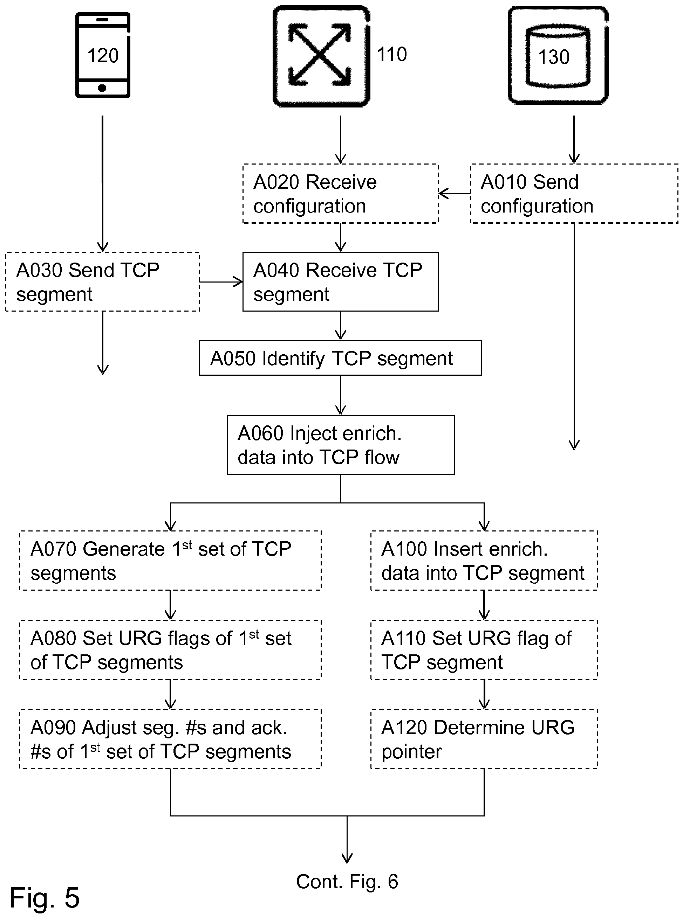

**Figure 5** illustrates an exemplifying method according to embodiments herein when implemented in the network 100 of Figure 4.

The intermediate network node 110 performs a method for managing at least one TCP segment. The intermediate network node 110 handles a TCP flow between a first end-point 120 and a second end-point 130. The second end-point 130 is configured to use enrichment data, which may be included in TCP segments received by the second end-point 130, i.e. the enrichment data may be included in the TCP flow towards the second end-point 130. This means that the intermediate network node 110 and the second end-point 130 have a common understanding relating to content and/or form of the enrichment data.

One or more of the following actions may be performed in any suitable order.

### Action A010

The second end-point 130 may send, to the intermediate network node 110, a configuration of enrichment data to be carried by the TCP segment and/or the first set of TCP segments. The configuration may define content and/or format of the enrichment data. The configuration may further comprise at least one identifier for identification of the TCP flow, e.g. to be used in action A050 below.

As an example, the format of the enrichment data may be arbitrary. The enrichment data may be inserted in clear text, encrypted or hashed, provided the intermediate network node 110 and the second end-point 130 have agreed on the format.

The data itself may also take any form. It may represent subscriber identify information, such as MSISDN, IMSI, ULI or the like.

### Action A020

Subsequently to action A010, the intermediate network node 110 may receive, from the second end-point 130, the configuration of enrichment data to be carried by the TCP segment and/or the first set of TCP segments. The configuration defines content and/or format of the enrichment data.

In this manner, the intermediate network node 110 may be made aware of how to identify the TCP flow to be enriched with enrichment data.

### Action A030

The first end-point 120 may send a TCP segment of the TCP flow towards the second end-point 130 via the intermediate network node 110.

### Action A040

Subsequently to action A030, the intermediate network node 110 receives, from the first end-point 120, the TCP segment. The TCP segment may be referred to as this TCP segment or the first TCP segment.

### Action A050

The intermediate network node 110 identifies the TCP segment as belonging to the TCP flow.

As an example, the intermediate network node 110 may identify the TCP segments as belonging to the TCP flow based on said at least one identifier of the configuration. For example, if the identifier of the configuration is equal to an identifier of the TCP segment, the intermediate network node 110 may conclude that the TCP segment belongs to the TCP flow. The identifier of the TCP segment, i.e. the identifier of this TCP segment, may be retrieved by use of deep packet inspection according to known manners.

In other examples, the TCP flow to enrich may be identified based on service or destination or any other criteria as is known in the art. As an example, Unique Resource Locators (URLs) may be used for classification in case HTTP acts as application layer.

### Action A060

The intermediate network node 110 injects enrichment data into the TCP flow by performing a first set of actions and/or a second set of actions.

The first set of actions comprises actions A070, A080 and A090 and the second set of actions comprises actions A100, A110 and A120. Depending on implementation the first and second sets of actions may include one or more actions in order to perform what is here illustrated as several actions.

Firstly, the first set of actions is described.

### Action A070

The intermediate network node 110 generates a first set of TCP segments comprising the enrichment data.

As an example, the intermediate network node 110 may generate the first set of TCP segments according to the configuration. This may mean that the intermediate network node 110 may configure the enrichment data according to content and/or format as given by the configuration and put the enrichment data as payload in at least some of the TCP segments of the first set.

For example, if the configuration defines that the first eight bytes of the enrichment data is an integer representing e.g. IMSI, and that the following bit represents WiFi or cellular as a true/false value, the intermediate network node 110 generates an integer based on the IMSI and inserts it as the first eight bytes of the enrichment data and then inserts a zero or one depending on the network, i.e. cellular or WiFi. Should it be that no IMSI can be retrieved, the intermediate network node 110 would have to pad the first eight bytes with zeros (or another agreed value e.g. 0xFFFFFFFF) and then append the bit representing WiFi or cellular. This example is purely as an illustration and may need some modification for a real-life scenario, but the principle used in this example applies.

Also, the enrichment data may be added into one of several segments, allowing for relatively large volumes of enrichment data to be injected.

### Action A080

The intermediate network node 110 sets a respective urgent "URG" flag of each TCP segment of the first set.

### Action A090

The intermediate network node 110 adjusts a respective sequence number of said each TCP segment of the first set and a respective acknowledgment number of said each TCP segment of the first set based on a sequence number of the TCP segment and an acknowledgment number of the TCP segment.

As an example of adjusting the respective sequence number of said each TCP segment of the first set, let's assume a value the sequence number of the TCP segment, i.e. the first TCP segment or this TCP segment received in action A040, to be X. Also, assume size of payload of this segment to be Y. Then, the respective sequence number of a first one - in order of generation according to action A070 - of the first set of TCP segments may be adjusted to X+Y by the intermediate network node 110. For a next one - in order of generation according to action A070 - of the first set of TCP segments, its respective sequence number may be adjusted to (X+Y)+Z by the intermediate network node, where Z is size of payload in the first one of the first set of TCP segments.

As another example relating to acknowledgment numbers, assume that the second end-point 130 replies by saying that it is ack-ing X+Y. The intermediate network node 110 then sends back to the first end-point 120 only an acknowledgement of X, removing Y bytes inserted by the intermediate network node 110. When the first end-point 120 sends X+W and the intermediate network node 110 converts it to X+Y+W, where Y is a size of the enrichment data as just indicated. Then, the second end-point 130 sends an acknowledgment of value X+Y+W. Again, the intermediate network node 110 then reduces the value of the acknowledgment number by Y and sends to the first end-point 120 an acknowledgment value of X+W. This works then for the first end-point 120 for which there is no Y, which as mentioned are bytes of the enrichment data added by the intermediate network node 110, which the first end-point 120 is not aware of.

Since the size Z is dependent on the payload of the first one of the first set of TCP segments, which carries the enrichment data, it may mean that the intermediate network node 110 may adjust the respective sequence number of said each TCP segment of the first set and a respective acknowledgment number of said each TCP segment of the first set based on a sequence number of the TCP segment and an acknowledgment number of the TCP segment and on a size of the enrichment data, e.g. in bytes.

This means that subsequent TCP segments, such as those received in action A190 below, on the same direction may need to have their sequence and acknowledgment numbers adjusted by the amount, in bytes, of the enrichment data injected. This adjustment may preferably continue until the TCP flow is ended, such as terminated or the like. In more detail, as indicated by the examples above, the sequence numbers need to be incremented and the acknowledgment number need to be decremented.

And then, secondly, the second set of actions is described.

When the second set of actions is to be performed, the intermediate network node 110 may check whether or not the TCP segment, i.e. the TCP segment or this TCP segment, is full or not. That is to say, if the TCP segment is less than a maximum size of TCP segments, at least some of the enrichment data may be inserted into this TCP segment. The maximum size may be a Maximum Segment Size (MSS) as known in the art.

### Action A100

The intermediate network node 110 inserts the enrichment data into the TCP segment.

As an example, the intermediate network node 110 may insert the enrichment data according to the configuration. This means that the intermediate network node 110 may generate the enrichment data while taking the configuration into account, e.g. using the format and/or content as prescribed by the configuration. See also example in relation to action A070.

Also, the enrichment data may be added into one of several segments, allowing for relatively large volumes of enrichment data to be injected. Thus, the intermediate network node 110 may inject the enrichment data into several TCP segments, each having a size less than the maximum size.

It may be preferred that a size of the enrichment data fits within the maximum size of the TCP segment in order to avoid defragmentation of the TCP segment.

When the enrichment data fits within this TCP segment, the enrichment data may be put directly after the TCP header of this TCP segment, and after any TCP Options if present, and the URG pointer may be set to locate the offset of a last byte of the enrichment data, sometimes also called URG data. Adding one to the offset indicated by the URG Pointer locates the first byte of regular payload data that was carried by the TCP segment, i.e. this TCP segment, when received by the intermediate network node 110.

### Action A110

The intermediate network node 110 sets an urgent "URG" flag of the TCP segment, i.e. the first TCP segment or this TCP segment.

### Action A120

The intermediate network node 110 determines an URG pointer of the TCP segment, again i.e. the first TCP segment or this TCP segment, based on the enrichment data.

### Action A130

The intermediate network node 110 may store the sequence number of the TCP segment and the acknowledgment number of the TCP segment. This action may also just after action A040 or at any later time. The stored sequence and acknowledgement numbers may have been used already in action A090 above.

In this manner, last sequence and acknowledgement numbers of the TCP segment on the direction towards the second end-point 130 may be identified and stored.

The method comprises, see actions below, at least one of actions A140 and A160 from the perspective of the intermediate network node 110, e.g. depending on whether the first set of actions and/or the second set of actions has/have been performed above. When the first set of actions has been performed action A140 is performed and/or when the second set of actions has been performed action A60 is performed.

### Action A140

The intermediate network node 110 may send, the first set of TCP segments to the second end-point 130.

### Action A150

Subsequently to action 140, the second end-point 130 may receive the first set of TCP segments from the intermediate network node 110.

In this manner, the second end-point 130 may, after processing of the first set of TCP segments, have been made aware of the enrichment data.

### Action A160

The intermediate network node 110 may send the TCP segment to the second end-point 130.

### Action A170

Subsequently to action 160, the second end-point 130 may receive the TCP segment from the intermediate network node 110.

In this manner, the second end-point 130 may, after processing of the TCP segment, have been made aware of the enrichment data.

### Action A180

The first end-point 120 may send a second set of TCP segments towards the second end-point 130 via the intermediate network node 110.

### Action A190

Subsequently to action 180, the intermediate network node 110 may therefore receive, from the first end-point 120, the second set of TCP segments.

### Action 200

When the second set of TCP segments are identified as belonging to the TCP flow, the intermediate network node 110 may set a respective sequence number of each TCP segment of the second set and a respective acknowledgment number of said each TCP segment of the second set based on the sequence number of the TCP segment and the acknowledgment number of the TCP segment

In this manner, the second set of TCP segments are turned into a modified second set of TCP segments.

### Action A210

The intermediate network node 110 may send, to the second end-point 130, the modified second set of TCP segments.

### Action A220

Subsequently to action A210, the second end-point 130 may receive the modified second set of TCP segments.

Hence, according to the embodiments above, the URG flag of TCP and the TCP OOB data mechanisms are used by the intermediate network node 110, such as a router, to enrich the TCP flow, e.g. with subscriber identity and/or contextual information, to the second end-point 130, such as a content provider or the like.

With the embodiments herein, one or more injections of enrichment data, the same or different, may be performed for the TCP flow, i.e. one and the same TCP flow. Multiple injections of enrichment data is be possible provided size of injected enrichment data is registered and used for adjustment of sequence and acknowledge numbers.

As described above according to the first embodiments, the injection assumes one or more new TCP segments to be generated, on top of an IP datagram, for the purposes of conveying the enrichment data.

In contrast thereto, as described above according to the second embodiments, an existing TCP segment is used for conveying the enrichment data. In the existing TCP segment, an end of the enrichment data is marked with the URG pointer. This is the same as marking with the URG pointer a start of the non-URG data, i.e. the payload data already carried by the existing TCP segment when it was received by the intermediate network node 110.

Further improvements of the embodiments herein may be provided for scenarios in which one Operating System process handles multiple flows
In these scenarios, in which one single process, possibly using several threads, handles multiple flows, a signal used by the Operating System to alert about the enrichment data could be linked to any of the multiple flows handled by said single process. The signal, sometimes referred to as user space signal, indicates to the single process that one or more TCP segments with URG flag set have arrived.

A solution in this scenario may be to allow the intermediate network node 110 to include in the enrichment data a 5-tuple of the TCP flow that is enriched. When the single process then receives the enrichment data, it is able to assign the enrichment data to the relevant flow, e.g. by matching the 5-tuple in the enrichment data received to a 5-tuple representing one of the multiple flows.

In conclusion, the embodiments herein imply low costs at the content provider, e.g. the second end-point 130, since - at least on e.g. Unix-like operating systems - a user space process signal is triggered by the TCP stack in the Operating System for the notification of the incoming enriched data. Accordingly, at the content provider no TCP stack changes are required and no TCP protocol changes are required. Though, as described above, e.g. the second end-point and the intermediate network node may preferably be configured with a common understanding concerning content and/or format of the enrichment data.

Moreover, the embodiments herein requires no HTTP traffic as in case X-headers for HTTP according to prior art are used. Since the enrichment data is inserted, or injected, at TCP, the embodiments herein work with HTTPs and other higher layer protocols, i.e. higher layer as compared to TCP layer.

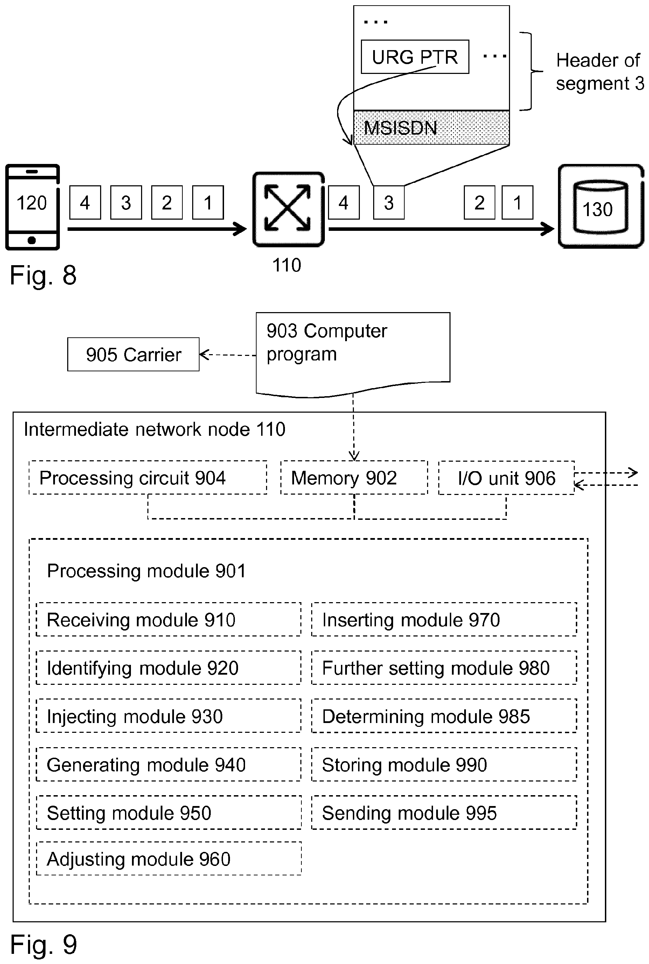

With reference to **Figure 9**, a schematic block diagram of embodiments of the intermediate network node 110 of Figure 1 is shown.

The intermediate network node 110 may comprise a **processing module 901**, such as a means for performing the methods described herein. The means may be embodied in the form of one or more hardware modules and/or one or more software modules
The intermediate network node 110 may further comprise a **memory 902.** The memory may comprise, such as contain or store, instructions, e.g. in the form of **a computer program 903,** which may comprise computer readable code units.

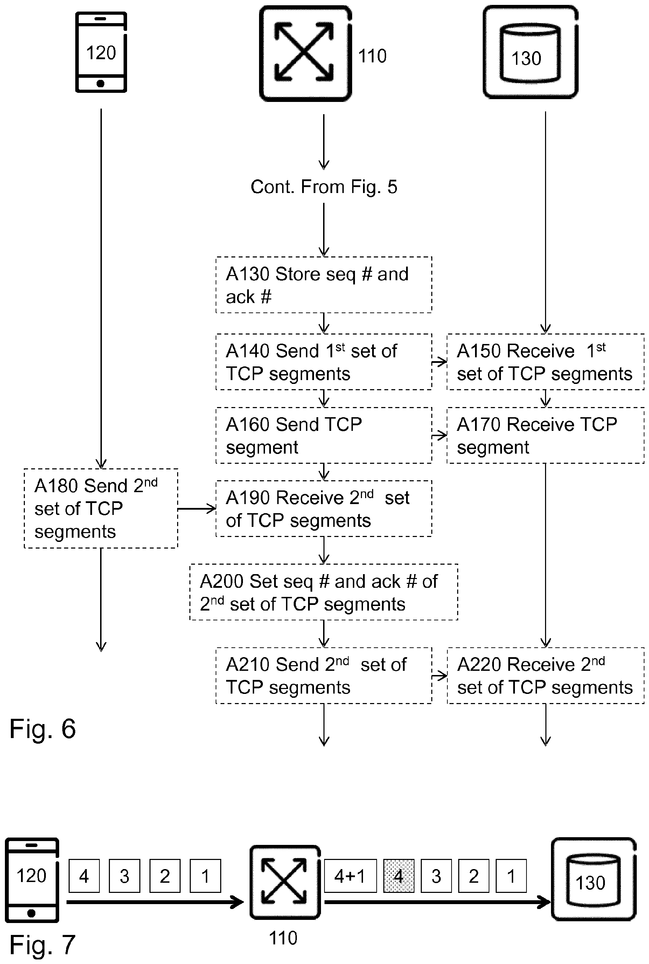

According to some embodiments herein, the intermediate network node 110 and/or the processing module 901 comprises **a processing circuit 904** as an exemplifying hardware module, which may comprise one or more processors. Accordingly, the processing module 901 may be embodied in the form of, or 'realized by', the processing circuit 904. The instructions may be executable by the processing circuit 904, whereby the intermediate network node 110 is operative to perform the methods of Figure 5 and/or Figure 6. As another example, the instructions, when executed by the intermediate network node 110 and/or the processing circuit 904, may cause the intermediate network node 110 to perform the method according to Figure 5 and/or Figure 6.

In view of the above, in one example, there is provided an intermediate network node 110 for managing at least one TCP segment. As mentioned, the intermediate network node 110 is configured for handling a TCP flow between a first end-point 120 and a second end-point 130, wherein the second end-point 130 is configured to use enrichment data included in received TCP segments. Again, the memory 902 contains the instructions executable by said processing circuit 904 whereby the intermediate network node 110 is operative for:
receiving, from the first end-point 120, a TCP segment,
identifying the TCP segment as belonging to the TCP flow, and
injecting enrichment data into the TCP flow by that the instructions are executable by said processing circuit 904, whereby the intermediate network node 110 is operative for performing a first set of actions and/or a second set of actions,
wherein the first set of actions comprises:
   generating a first set of TCP segments comprising the enrichment data,
   setting a respective urgent "URG" flag of each TCP segment of the first set, and
   adjusting a respective sequence number of said each TCP segment of the first set and a respective acknowledgment number of said each TCP segment of the first set based on a sequence number of the TCP segment and an acknowledgment number of the TCP segment, and
   wherein the second set of actions comprises:
      inserting the enrichment data into the TCP segment,
      setting an urgent "URG" flag of the TCP segment, and
      determining an URG pointer of the TCP segment based on the enrichment data.

Figure 9 further illustrates **a carrier 905**, or program carrier, which comprises the computer program 903 as described directly above.

In some embodiments, the intermediate network node 110 and/or the processing module 901 may comprise one or more of a **receiving module 910**, **an identifying module 920, an injecting module 930, a generating module 940, a setting module 950, an adjusting module 960, an inserting module 970, a further setting module 980, a determining module 985, a storing module 990** and a **sending module 995** as exemplifying hardware modules. In other examples, one or more of the aforementioned exemplifying hardware modules may be implemented as one or more software modules.

Moreover, the processing module 901 comprises **an Input/Output unit 906**, which may be exemplified by the receiving module and/or the sending module when applicable.

Accordingly, the intermediate network node 110 is configured for managing at least one TCP segment. As mentioned, the intermediate network node 110 is configured for handling a TCP flow between a first end-point 120 and a second end-point 130. The second end-point 130 is configured to use enrichment data included in received TCP segments. A telecommunication network 100 may comprise the intermediate network node 110.

Therefore, according to the various embodiments described above, the intermediate network node 110 and/or the processing module 901 and/or the receiving module 910 is configured for receiving, from the first end-point 120, a TCP segment.

The intermediate network node 110 and/or the processing module 901 and/or the identifying module 920 is configured for identifying the TCP segment as belonging to the TCP flow.

The intermediate network node 110 and/or the processing module 901 and/or the injecting module 930 is configured for injecting enrichment data into the TCP flow by being configured for performing a first set of actions and/or a second set of actions.

The first set of actions may be performed by that the intermediate network node 110 and/or the processing module 901 and/or the generating module 940 is configured for generating a first set of TCP segments comprising the enrichment data. The intermediate network node 110 and/or the processing module 901 and/or the setting module 950 is configured for setting a respective urgent "URG" flag of each TCP segment of the first set. The intermediate network node 110 and/or the processing module 901 and/or the adjusting module 960 is configured for adjusting a respective sequence number of said each TCP segment of the first set and a respective acknowledgment number of said each TCP segment of the first set based on a sequence number of the TCP segment and an acknowledgment number of the TCP segment.

The second set of action may be performed by that the intermediate network node 110 and/or the processing module 901 and/or the inserting module 970 is configured for inserting the enrichment data into the TCP segment. The intermediate network node 110 and/or the processing module 901 and/or the further setting module 980, or the setting module 950, is configured for setting an urgent "URG" flag of the TCP segment. The intermediate network node 110 and/or the processing module 901 and/or the determining module 985 is configured for determining an URG pointer of the TCP segment based on the enrichment data.

The enrichment data may comprise at least one of: subscriber identity information, MSISDN, IMSI, ULI, a free text and the like.

In some embodiments, the intermediate network node 110 and/or the processing module 901 and/or the receiving module 910 may be configured for receiving, from the second end-point 130, a configuration of enrichment data to be carried by the TCP segment and/or the first set of TCP segments. The configuration may define content and/or format of the enrichment data. The intermediate network node 110 and/or the processing module 901 and/or the generating module 940, or a further determining module (not shown), may be configured for generating the first set of TCP segments according to the configuration and/or the intermediate network node 110 and/or the processing module 901 and/or the inserting module 970, or a further inserting module (not shown), may be configured for inserting the enrichment data into the TCP segment according to the configuration.

The configuration may further comprise at least one identifier for identification of the TCP flow.

The intermediate network node 110 and/or the processing module 901 and/or the identifying module 920 may be configured for identifying the TCP flow is based on said at least one identifier.

As used herein, the term "node", or "network node", may refer to one or more physical entities, such as devices, apparatuses, computers, servers or the like. This may mean that embodiments herein may be implemented in one physical entity. Alternatively, the embodiments herein may be implemented in a plurality of physical entities, such as an arrangement comprising said one or more physical entities, i.e. the embodiments may be implemented in a distributed manner, such as on a set of server machines of a cloud system.

As used herein, the term "module" may refer to one or more functional modules, each of which may be implemented as one or more hardware modules and/or one or more software modules and/or a combined software/hardware module in a node. In some examples, the module may represent a functional unit realized as software and/or hardware of the node.

As used herein, the term "computer program carrier", "program carrier", or "carrier", may refer to one of an electronic signal, an optical signal, a radio signal, and a computer readable medium. In some examples, the computer program carrier may exclude transitory, propagating signals, such as the electronic, optical and/or radio signal. Thus, in these examples, the computer program carrier may be a non-transitory carrier, such as a non-transitory computer readable medium.

As used herein, the term "processing module" may include one or more hardware modules, one or more software modules or a combination thereof. Any such module, be it a hardware, software or a combined hardware-software module, may be a determining means, estimating means, capturing means, associating means, comparing means, identification means, selecting means, receiving means, sending means or the like as disclosed herein. As an example, the expression "means" may be a module corresponding to the modules listed above in conjunction with the Figures.

As used herein, the term "software module" may refer to a software application, a Dynamic Link Library (DLL), a software component, a software object, an object according to Component Object Model (COM), a software component, a software function, a software engine, an executable binary software file or the like.

The terms "processing module" or "processing circuit" may herein encompass a processing unit, comprising e.g. one or more processors, an Application Specific integrated Circuit (ASIC), a Field-Programmable Gate Array (FPGA) or the like. The processing circuit or the like may comprise one or more processor kernels.

As used herein, the expression "configured to/for" may mean that a processing circuit is configured to, such as adapted to or operative to, by means of software configuration and/or hardware configuration, perform one or more of the actions described herein.

As used herein, the term "action" may refer to an action, a step, an operation, a response, a reaction, an activity or the like. It shall be noted that an action herein may be split into two or more sub-actions as applicable. Moreover, also as applicable, it shall be noted that two or more of the actions described herein may be merged into a single action.

As used herein, the term "memory" may refer to a hard disk, a magnetic storage medium, a portable computer diskette or disc, flash memory, random access memory (RAM) or the like. Furthermore, the term "memory" may refer to an internal register memory of a processor or the like.

As used herein, the term "computer readable medium" may be a Universal Serial Bus (USB) memory, a DVD-disc, a Blu-ray disc, a software module that is received as a stream of data, a Flash memory, a hard drive, a memory card, such as a MemoryStick, a Multimedia Card (MMC), Secure Digital (SD) card, etc. One or more of the aforementioned examples of computer readable medium may be provided as one or more computer program products.

As used herein, the term "computer readable code units" may be text of a computer program, parts of or an entire binary file representing a computer program in a compiled format or anything there between.

As used herein, the expression "transmit" and "send" are considered to be interchangeable. These expressions include transmission by broadcasting, uni-casting, group-casting and the like. In this context, a transmission by broadcasting may be received and decoded by any authorized device within range. In case of uni-casting, one specifically addressed device may receive and decode the transmission. In case of group-casting, a group of specifically addressed devices may receive and decode the transmission.

As used herein, the terms "number" and/or "value" may be any kind of digit, such as binary, real, imaginary or rational number or the like. Moreover, "number" and/or "value" may be one or more characters, such as a letter or a string of letters. "Number" and/or "value" may also be represented by a string of bits, i.e. zeros and/or ones.

As used herein, the term "set of" may refer to one or more of something. E.g. a set of devices may refer to one or more devices, a set of parameters may refer to one or more parameters or the like according to the embodiments herein.

As used herein, the expression "in some embodiments" has been used to indicate that the features of the embodiment described may be combined with any other embodiment disclosed herein.

Even though embodiments of the various aspects have been described, many different alterations, modifications and the like thereof will become apparent for those skilled in the art. The described embodiments are therefore not intended to limit the scope of the present disclosure which is set out by the appended set of claims.

## Claims

1. A method, performed by an intermediate network node (110), for managing at least one Transmission Control Protocol "TCP" segment, wherein the intermediate network node (110) handles a TCP flow between a first end-point (120) and a second end-point (130), wherein the second end-point (130) is configured to use enrichment data included in received TCP segments, wherein the method comprises:
receiving (A040), from the first end-point (120), a TCP segment,
identifying (A050) the TCP segment as belonging to the TCP flow, and
the method is **characterized in**
injecting (A060) enrichment data into the TCP flow by performing a first set of actions and/or a second set of actions, wherein the enrichment data comprises at least one of: subscriber identity information, Mobile Station International Subscriber Directory Number "MSISDN", International Mobile Subscriber Identity "IMSI", User Location Info "ULI", and a free text,
wherein the first set of actions comprises:
generating (A070) a first set of TCP segments comprising the enrichment data,
setting (A080) a respective urgent "URG" flag of each TCP segment of the first set, and
adjusting (A090) a respective sequence number of said each TCP segment of the first set and a respective acknowledgment number of said each TCP segment of the first set based on a sequence number of the TCP segment and an acknowledgment number of the TCP segment, and
wherein the second set of actions comprises:
inserting (A100) the enrichment data into the TCP segment,
setting (A110) an urgent "URG" flag of the TCP segment, and
determining (A120) an URG pointer of the TCP segment based on the enrichment data.

2. The method according to any one of the preceding claims, wherein the method comprises:
receiving (A020), from the second end-point (130), a configuration of enrichment data to be carried by the TCP segment and/or the first set of TCP segments, wherein the configuration defines content and/or format of the enrichment data, wherein
the generating (A070) of the first set of TCP segments is performed according to the configuration and/or the inserting (A100) of the enrichment data into the TCP segment is performed according to the configuration.

3. The method according to the preceding claim, wherein the configuration further comprises at least one identifier for identification of the TCP flow, wherein the identifying (A050) of the TCP flow is based on said at least one identifier.

4. The method according to any one of the preceding claims, wherein a telecommunication network (100) comprises the intermediate network node (110).

5. A computer program (803), comprising computer readable code units which when executed on an intermediate network node (110) causes the intermediate network node (110) to perform the method according to any one of claims 1-4.

6. A computer program carrier (805) comprising the computer program according to the preceding claim, wherein the computer program carrier (805) is one of an electronic signal, an optical signal, a radio signal and a computer readable medium.

7. An intermediate network node (110) configured for managing at least one Transmission Control Protocol "TCP" segment, wherein the intermediate network node (110) is configured for handling a TCP flow between a first end-point (120) and a second end-point (130), wherein the second end-point (130) is configured to use enrichment data included in received TCP segments, wherein the intermediate network node (110) is configured for:
receiving, from the first end-point (120), a TCP segment,
identifying the TCP segment as belonging to the TCP flow, and
**Characterized in that** the intermediate network node (110) is configured for
injecting enrichment data into the TCP flow by being configured for performing a first set of actions and/or a second set of actions, wherein the enrichment data comprises at least one of: subscriber identity information, Mobile Station International Subscriber Directory Number "MSISDN", International Mobile Subscriber Identity "IMSI", User Location Info "ULI", and a free text,
wherein the first set of actions comprises:
generating a first set of TCP segments comprising the enrichment data,
setting a respective urgent "URG" flag of each TCP segment of the first set, and
adjusting a respective sequence number of said each TCP segment of the first set and a respective acknowledgment number of said each TCP segment of the first set based on a sequence number of the TCP segment and an acknowledgment number of the TCP segment, and
wherein the second set of actions comprises:
inserting the enrichment data into the TCP segment,
setting an urgent "URG" flag of the TCP segment, and
determining an URG pointer of the TCP segment based on the enrichment data.

8. The intermediate network node (110) according to claim 7, wherein the intermediate network node (110) further is configured for:
receiving, from the second end-point (130), a configuration of enrichment data to be carried by the TCP segment and/or the first set of TCP segments, wherein the configuration defines content and/or format of the enrichment data, wherein the intermediate network node (110) further is configured for generating the first set of TCP segments according to the configuration and/or the intermediate network node (110) further is configured for inserting the enrichment data into the TCP segment according to the configuration.

9. The intermediate network node (110) according to the preceding claim, wherein the configuration further comprises at least one identifier for identification of the TCP flow, wherein the intermediate network node (110) is configured for identifying the TCP flow is based on said at least one identifier.

10. The intermediate network node (110) according to any one of claims 7-9, wherein a telecommunication network (100) comprises the intermediate network node (110).

## Patentansprüche

1. Verfahren, das von einem Zwischennetzwerkknoten (110) durchgeführt wird, zur Handhabung mindestens eines Segments eines Übertragungssteuerungsprotokolls, TCP, wobei der Zwischennetzwerkknoten (110) einen TCP-Fluss zwischen einem ersten Endpunkt (120) und einem zweiten Endpunkt (130) abwickelt, wobei der zweite Endpunkt (130) so konfiguriert ist, dass er Anreicherungsdaten verwendet, die in empfangenen TCP-Segmenten enthalten sind, wobei das Verfahren umfasst:
Empfangen (A040) eines TCP-Segments vom ersten Endpunkt (120),
Identifizieren (A050) des TCP-Segments als zum TCP-Fluss gehörig, und
wobei das Verfahren **gekennzeichnet ist durch**
Injizieren (A060) von Anreicherungsdaten in den TCP-Fluss durch Durchführen eines ersten Satzes von Maßnahmen und/oder eines zweiten Satzes von Maßnahmen, wobei die Anreicherungsdaten mindestens eines umfassen von: Teilnehmerkennungsinformationen, einer internationalen Mobilstations-Teilnehmerverzeichnisnummer, MSISDN, einer internationalen Mobilteilnehmerkennung, IMSI, Benutzeraufenthaltsorts-Info, ULI, und einem freien Text.
wobei der erste Satz von Maßnahmen umfasst:
Erzeugen (A070) eines ersten Satzes von TCP-Segmenten, welche die Anreicherungsdaten umfassen,
Setzen (A080) eines jeweiligen Dringend-,URG-,Flags jedes TCP-Segments des ersten Satzes und
Anpassen (A090) einer jeweiligen Reihenfolgenummer des jeden TCP-Segments des ersten Satzes und einer jeweiligen Bestätigungsnummer des jeden TCP-Segments des ersten Satzes basierend auf einer Reihenfolgenummer des TCP-Segments und einer Bestätigungsnummer des TCP-Segments, und
wobei der zweite Satz von Maßnahmen umfasst:
Einfügen (A100) der Anreicherungsdaten in das TCP-Segment,
Setzen (A110) eines Dringend-,URG-,Flags des TCP-Segments und
Bestimmen (A120) eines URG-Zeigers des TCP-Segments basierend auf den Anreicherungsdaten.

2. Verfahren nach einem der vorhergehenden Ansprüche, wobei das Verfahren umfasst:
Empfangen (A020) einer Konfiguration von Anreicherungsdaten vom zweiten Endpunkt (130), die durch das TCP-Segment und/oder den ersten Satz von TCP-Segmenten übertragen werden sollen, wobei die Konfiguration Inhalt und/oder Format der Anreicherungsdaten definiert, wobei
das Erzeugen (A070) des ersten Satzes von TCP-Segmenten gemäß der Konfiguration durchgeführt wird, und/oder das Einfügen (A100) der Anreicherungsdaten in das TCP-Segment gemäß der Konfiguration durchgeführt wird.

3. Verfahren nach dem vorhergehenden Anspruch, wobei die Konfiguration ferner mindestens eine Kennung zur Identifizierung des TCP-Flusses umfasst, wobei das Identifizieren (A050) des TCP-Flusses auf der mindestens einen Kennung basiert.

4. Verfahren nach einem der vorhergehenden Ansprüche, wobei ein Telekommunikationsnetzwerk (100) den Zwischennetzwerkknoten (110) umfasst.

5. Computerprogramm (803), umfassend computerlesbare Codeeinheiten, die bei Ausführung auf einem Zwischennetzwerknoten (110) den Zwischennetzwerkknoten (110) zum Durchführen des Verfahrens nach einem der Ansprüche 1 bis 4 veranlassen.

6. Computerprogrammträger (805), umfassend das Computerprogramm nach dem vorhergehenden Anspruch, wobei der Computerprogrammträger (805) ein elektronisches Signal, ein optisches Signal, ein Funksignal oder ein computerlesbares Medium ist.

7. Zwischennetzwerkknoten (110), der zum Handhaben mindestens eines Segments eines Übertragungssteuerungsprotokolls, TCP, konfiguriert ist, wobei der Zwischennetzwerkknoten (110) zum Abwickeln eines TCP-Flusses zwischen einem ersten Endpunkt (120) und einem zweiten Endpunkt (130) konfiguriert ist, wobei der zweite Endpunkt (130) so konfiguriert ist, dass er Anreicherungsdaten verwendet, die in empfangenen TCP-Segmenten enthalten sind, wobei der Zwischennetzwerkknoten (110) konfiguriert ist zum:
Empfangen eines TCP-Segments vom ersten Endpunkt (120),
Identifizieren des TCP-Segments als zum TCP-Fluss gehörig, und
**dadurch gekennzeichnet, dass** der Zwischennetzwerkknoten ferner konfiguriert ist zum:
Injizieren von Anreicherungsdaten in den TCP-Fluss, indem er konfiguriert zum Durchführen eines ersten Satzes von Maßnahmen und/oder eines zweiten Satzes von Maßnahmen konfiguriert ist, wobei die Anreicherungsdaten mindestens eines umfassen von: Teilnehmerkennungsinformationen, einer internationalen Mobilstations-Teilnehmerverzeichnisnummer, MSISDN, einer internationalen Mobilteilnehmerkennung, IMSI, Benutzeraufenthaltsorts-Info, ULI, und einem freien Text.
wobei der erste Satz von Maßnahmen umfasst:
Erzeugen eines ersten Satzes von TCP-Segmenten, welche die Anreicherungsdaten umfassen,
Setzen eines jeweiligen Dringend-,URG-,Flags jedes TCP-Segments des ersten Satzes und
Anpassen einer jeweiligen Reihenfolgenummer des jeden TCP-Segments des ersten Satzes und einer jeweiligen Bestätigungsnummer des jeden TCP-Segments des ersten Satzes basierend auf einer Reihenfolgenummer des TCP-Segments und einer Bestätigungsnummer des TCP-Segments, und
wobei der zweite Satz von Maßnahmen umfasst:
Einfügen der Anreicherungsdaten in das TCP-Segment,
Setzen eines Dringend-,URG-,Flags des TCP-Segments und Bestimmen eines URG-Zeigers des TCP-Segments basierend auf den Anreicherungsdaten.

8. Zwischennetzwerkknoten (110) nach Anspruch 7, wobei der Zwischennetzwerkknoten (110) konfiguriert ist zum:
Empfangen einer Konfiguration von Anreicherungsdaten vom zweiten Endpunkt (130), die durch das TCP-Segment und/oder den ersten Satz von TCP-Segmenten übertragen werden sollen, wobei die Konfiguration Inhalt und/oder Format der Anreicherungsdaten definiert, wobei der Zwischennetzwerkknoten (110) ferner zum Erzeugen des ersten Satzes von TCP-Segmenten gemäß der Konfiguration konfiguriert ist, und/oder der Zwischennetzwerkknoten (110) zum Einfügen der Anreicherungsdaten in das TCP-Segment gemäß der Konfiguration konfiguriert ist.

9. Zwischennetzwerkknoten (110) nach einem der vorhergehenden Ansprüche, wobei die Konfiguration ferner mindestens eine Kennung zur Identifizierung des TCP-Flusses umfasst, wobei der Zwischennetzwerkknoten (110) zum Identifizieren des TCP-Flusses basierend auf der mindestens einen Kennung konfiguriert ist.

10. Zwischennetzwerkknoten (110) nach einem Ansprüche 7 bis 9, wobei ein Telekommunikationsnetzwerk (100) den Zwischennetzwerkknoten (110) umfasst.

## Revendications

1. Procédé, réalisé par un nœud de réseau intermédiaire (110), pour gérer au moins un segment de protocole de commande de transmission, TCP, dans lequel le nœud de réseau intermédiaire (110) prend en charge un flux TCP entre un premier point d'extrémité (120) et un deuxième point d'extrémité (130), dans lequel le deuxième point d'extrémité (130) est configuré pour utiliser des données d'enrichissement incluses dans des segments TCP reçus, dans lequel le procédé comprend :
la réception (A040), en provenance du premier point d'extrémité (120), d'un segment TCP,
l'identification (A050) que le segment TCP appartient au flux TCP, et
le procédé est **caractérisé par**
l'injection (A060) de données d'enrichissement dans le flux TCP par la réalisation d'un premier ensemble d'actions et/ou d'un deuxième ensemble d'actions, dans lequel les données d'enrichissement comprennent au moins l'un de : informations d'identité d'abonné, numéro de répertoire d'abonné international de station mobile, MSISDN, identité d'abonné mobile internationale, IMSI, informations d'emplacement d'utilisateur, ULI, et un texte libre,
dans lequel le premier ensemble d'actions comprend :
la génération (A070) d'un premier ensemble de segments TCP comprenant les données d'enrichissement,
le réglage (A080) d'un drapeau urgent, URG, respectif de chaque segment TCP du premier ensemble, et
l'ajustement (A090) d'un numéro de séquence respectif dudit chaque segment TCP du premier ensemble et d'un numéro d'accusé de réception respectif dudit chaque segment TCP du premier ensemble sur la base d'un numéro de séquence du segment TCP et d'un numéro d'accusé de réception du segment TCP, et
dans lequel le deuxième ensemble d'actions comprend :
l'insertion (A100) des données d'enrichissement dans le segment TCP,
le réglage (A110) d'un drapeau urgent, URG, du segment TCP, et
la détermination (A120) d'un pointeur URG du segment TCP sur la base des données d'enrichissement.

2. Procédé selon l'une quelconque des revendications précédentes, dans lequel le procédé comprend :
la réception (A020), en provenance du deuxième point d'extrémité (130), d'une configuration de données d'enrichissement à transporter par le segment TCP et/ou le premier ensemble de segments TCP, dans lequel la configuration définit un contenu et/ou un format des données d'enrichissement, dans lequel
la génération (A070) du premier ensemble de segments TCP est réalisé en fonction de la configuration et/ou l'insertion (A100) des données d'enrichissement dans le segment TCP est réalisée en fonction de la configuration.

3. Procédé selon l'une quelconque des revendications précédentes, dans lequel la configuration comprend en outre au moins un identifiant pour l'identification du flux TCP, dans lequel l'identification (A050) du flux TCP est basée sur ledit au moins un identifiant.

4. Procédé selon l'une quelconque des revendications précédentes, dans lequel un réseau de télécommunication (100) comprend le nœud de réseau intermédiaire (110).

5. Programme informatique (803), comprenant des unités de code lisibles par ordinateur qui, lorsqu'elles sont exécutées sur un nœud de réseau intermédiaire (110), amènent le nœud de réseau intermédiaire (110) à réaliser le procédé selon l'une quelconque des revendications 1 à 4.

6. Support de programme informatique (805) comprenant le programme informatique selon la revendication précédente, dans lequel le support de programme informatique (805) est l'un d'un signal électronique, d'un signal optique, d'un signal radio et d'un support lisible par ordinateur.

7. Nœud de réseau intermédiaire (110) configuré pour gérer au moins un segment de protocole de commande de transmission, TCP, dans lequel le nœud de réseau intermédiaire (110) est configuré pour prendre en charge un flux TCP entre un premier point d'extrémité (120) et un deuxième point d'extrémité (130), dans lequel le deuxième point d'extrémité (130) est configuré pour utiliser des données d'enrichissement incluses dans des segments TCP reçus, dans lequel le nœud de réseau intermédiaire (110) est configuré pour :
la réception, en provenance du premier point d'extrémité (120), d'un segment TCP,
l'identification que le segment TCP appartient au flux TCP, et
**caractérisé en ce que** le nœud de réseau intermédiaire (110) est configuré pour
l'injection de données d'enrichissement dans le flux TCP en étant configuré pour la réalisation d'un premier ensemble d'actions et/ou d'un deuxième ensemble d'actions, dans lequel les données d'enrichissement comprennent au moins l'un de : informations d'identité d'abonné, numéro de répertoire d'abonné international de station mobile, MSISDN, identité d'abonné mobile internationale, IMSI, informations d'emplacement d'utilisateur, ULI, et un texte libre,
dans lequel le premier ensemble d'actions comprend :
la génération d'un premier ensemble de segments TCP comprenant les données d'enrichissement,
le réglage d'un drapeau urgent, URG, respectif de chaque segment TCP du premier ensemble, et
l'ajustement d'un numéro de séquence respectif dudit chaque segment TCP du premier ensemble et d'un numéro d'accusé de réception respectif dudit chaque segment TCP du premier ensemble sur la base d'un numéro de séquence du segment TCP et d'un numéro d'accusé de réception du segment TCP, et
dans lequel le deuxième ensemble d'actions comprend :
l'insertion des données d'enrichissement dans le segment TCP,
le réglage d'un drapeau urgent, URG, du segment TCP, et
la détermination d'un pointeur URG du segment TCP sur la base des données d'enrichissement.

8. Nœud de réseau intermédiaire (110) selon la revendication 7, dans lequel le nœud de réseau intermédiaire (110) est en outre configuré pour :
la réception, en provenance du deuxième point d'extrémité (130), d'une configuration de données d'enrichissement à transporter par le segment TCP et/ou le premier ensemble de segments TCP, dans lequel la configuration définit un contenu et/ou un format des données d'enrichissement, dans lequel le nœud de réseau intermédiaire (110) est en outre configuré pour la génération du premier ensemble de segments TCP en fonction de la configuration et/ou le nœud de réseau intermédiaire (110) est en outre configuré pour l'insertion des données d'enrichissement dans le segment TCP en fonction de la configuration.

9. Nœud de réseau intermédiaire (110) selon la revendication précédente, dans lequel la configuration comprend en outre au moins un identifiant pour l'identification du flux TCP, dans lequel le nœud de réseau intermédiaire (110) est configuré pour l'identification du flux TCP sur la base dudit au moins un identifiant.

10. Nœud de réseau intermédiaire (110) selon l'une quelconque des revendications 7 à 9, dans lequel un réseau de télécommunication (100) comprend le nœud de réseau intermédiaire (110).
